# EUROPÄISCHE PATENTSCHRIFT

(11) **EP 0 501 020 B1**
(45) Veröffentlichungstag und Bekanntmachung des Hinweises auf die Patenterteilung: **05.07.1995**
(21) Anmeldenummer: 91120248.9
(22) Anmeldetag: 27.11.1991
(51) Int. Cl.: B29C 45/23, B29C 45/17

(54) **Plastifizierzylinder an einer Kunststoff-Spritzgiessmaschine**
Plasticising cylinder of a plastic injection moulding machine
Cylindre de plastification d'une machine à mouler par injection les matières plastiques

(30) Priorität: 23.02.1991 DE 4105731
(43) Veröffentlichungstag der Anmeldung: 02.09.1992
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- EP-A- 0 320 788
- EP-A- 0 322 497
- EP-A- 0 483 541

## Beschreibung

Die Erfindung betrifft einen Plastifizierzylinder entsprechend dem Oberbegriff des Patentanspruches 1.

Ein bekannter Plastifizierzylinder dieser Art (EP 0 322 497 A2; DE-PS 37 44 519) ist von einem Skelett umschlossen, das sich axial über den Mittelabschnitt des Plastifizierzylinders erstreckt.

Der prinzipielle Aufbau dieses Skelettes ist im einzelnen aus der DE 37 42 403 C1, Fig. 5 bekannt.

Der gattungsgemäße Plastifizierzylinder ist in einer Bohrung des Trägerblockes lösbar aufgenommen, der im Bereich des Trägerblockes angeordnete Antriebszylinder für die Düsennadel ist von der kraftübertragenden Brücke abkuppelbar, so daß er beim Wechsel des Plastifizierzylinders in der Kunststoff-Spritzgießmaschine verbleiben kann. Die Schwenkbolzen des Schwenkhebels sind am Korpus des Düsenteils bzw. des Zylinderteils gelagert. Schwenkbolzen und Schwenkhebel unterliegen daher beim Spritzbetrieb extrem hohen Temperaturen. Es ist demzufolge erforderlich, für die genannten Bauteile thermoresistente Gußteile mit veredelten Oberflächen zu verwenden. Diese lassen wegen der Kürze der Düsennadel bei der Fertigung nur geringe Fertigungstoleranzen zu. Fertigungstechnisch ist daher die Abstützung des Schwenkhebels am Düsenteil bzw. am Zylinderteil verhältnismäßig aufwendig. Dies gilt insbesondere auch für die Ausbildung von Schwenklagern für die Schwenkbolzen des Schwenkhebels am Düsenteil bzw. am Zylinderteil.

Beim bekannten Plastifizierzylinder ist der Neigungswinkel der Düsennadel zur Spritzachse aus verschiedenen Gründen sehr groß, nämlich im Bereich von 30° gewählt. Dadurch ist einerseits ein verhältnismäßig kurzer Anschnitt des Düsenkanals der Einmündung der Düsenbohrung in den Düsenkanal erreicht, was die Schließfunktion begünstigt. Darüber hinaus ist die Wahl eines großen Neigungswinkels durch den benachbarten Spannring, das vordere Ende des Zylinderteils und das benachbarte Heizelement bestimmt, welche genannte Bauteile ein erhebliches Hindernis für eine Verkleinerung des Neigungswinkels der Düsennadel darstellt.

Der Erfindung liegt die Aufgabe zugrunde, bei einem Plastifizierzylinder der eingangs genannten Gattung die Fertigungskosten für die Mittel zu senken, welche die Kraftübertragung und Umlenkung der zur Spritzachse parallelen Antriebsbewegungen des Antriebszylinders auf die zur Spritzachse winklig angeordnete Düsennadel bewirken.

Diese Aufgabe wird erfindungsgemäß dadurch gelöst, daß die Schwenkbolzen des Schwenkhebels in radialem Abstand zu den Heizelementen des Plastifizierzylinders an Skelettelementen innerhalb des Skeletts abgestützt sind, wobei die Düsennadel sich bis in den axialen Bereich der in vorderer Position befindlichen Förderschnecke erstreckt und im axialen Bereich der Rückstromsperre aus der mit einem rückwärtigen Abschnitt größerer lichter Weite versehenen Bohrung austritt.

Die Ortsbestimmung "innerhalb des Skelettes" für den Schwenkhebel bedeutet eine derartige Anordnung der Bauteile des Schwenkhebels, daß diese Bauteile näher an der Spritzachse des Plastifizierzylinders liegen als die peripheren Teile des Skeletts, so daß von außen kommende mechanische Einwirkungen das Skelett, nicht aber den Schwenkhebel treffen.

Bei der erfindungsgemäßen Ausbildung des Plastifizierzylinders liegt der Schwenkhebel und seine Schwenklager außerhalb der Hitzezone des benachbarten Heizelementes, obwol der Schwenkhebel gewissermaßen in das Skelett des Plastifizierzylinders hineinverlegt. Dadurch ist es möglich, den Schwenkhebel und seine Schwenklager so zu gestalten, daß bessere Voraussetzungen für eine rationelle Serienfertigung vorliegen.

In diesem Sinne kann der bügelförmige Schwenkhebel und seine Schwenklager bei relativ großen Fertigungstoleranzen hergestellt werden. Der Schwenkhebel kann z.B. aus gebogenen Blechstreifen aufgebaut sein. Er kann vorzugsweise an horizontalen Schienen des Skelettes aufgehängt werden, welche ohnehin zur Abstützung des Plastifizierzylinders mit seinen periodischen Achsialbewegungen erforderlich sind.

Beim Schließen bzw. Öffnen der Düsenmündung bewegt sich der Achsbolzen auf einem Kreisbogen, was zu einer Biegebeanspruchung des benachbarten Abschnittes der kraftübertragenden Brücke und des rückwärtigen Abschnittes der Düsennadel führt. Dank des relativ großen Abstandes des Schwenkhebels von der Düsenmündung tendieren diese Beanspruchungen gegen Null.

Schließlich sind die Düsennadel und der mit ihr verbundene Brückenabschnitt im Korpus des Plastifizierzylinders und im Skelett so weitgehend versenkt, daß Beschädigungen praktisch ausgeschlossen sind.

Bei einer Ausgestaltung nach den Ansprüchen 2 und 3 ist ein besonders kleiner Neigungswinkel der Düsennadel realisierbar, weil die Düsennadel den Spannring der Spanneinrichtung durchdringt und erst im axialen Abschnitt des Zylinderteils annäherungsweise in der Sperrebene der Rückstromsperre aus dem Zylinderteil ausmündet, um sodann den Gußkörper des dortigen Heizelementes über Aussparungen zu durchdringen.

Nach einer Ausbildung des Plastifizierzylinders nach Anspruch 4 ist eine besonders kostengünstige Fertigung des Skeletts bei geringen Biegebeanspruchungen des benachbarten Brückenabschnittes und der Düsennadel möglich.

Bei einer Ausgestaltung des Skelettes nach Anspruch 5 sind Beschädigungen der Düsennadel, des benachbarten Brückenabschnittes und des Schwenkhebels infolge äußeren Krafteinwirkungen, insbesondere beim Wechsel des Plastifizierzylinders und bei dessen Transport zum und vom Depot nahezu ausgeschlossen, was insbesondere beim Einsatz der Kunststoff-Spritzgießmaschinen in industriell wenig entwickelten Ländern von Bedeutung ist.

Nach den Ansprüchen 6 und 7 ist eine besonders kostengünstige Fertigung des der Düsennadel benachbarten Brückenabschnittes und des Schwenkhebels möglich.

Bei einer weiteren Ausgestaltung des Plastifizierzylinders nach den Ansprüchen 8 und 9 ergibt sich eine stark verlängerte Variante des Plastifizierzylinders, die mit äußerst geringem Montageaufwand in einen Plastifizierzylinder normaler Länge umwandelbar ist. Die wahlweise Auslieferung des Plastifizierzylinders in zwei Varianten unterschiedlicher Länge ist dadurch mit einem Minimum an fertigungstechnischem Aufwand möglich, daß in der Fertigung und in der Lagerhaltung lediglich ein Verlängerungsteil des Zylinderteils und eine Stange größerer Länge im vorderen Brückenabschnitt vorzusehen sind. Dabei entsprechen die vorderen und hinteren Anschlußprofile des Verlängerungsteils und der Verlängerungsstange den entsprechenden Anschlußprofilen des Düsenteils und des Zylinderteils normaler Länge bzw. der Stange normaler Länge. Selbstverständlich erfordert die verlängerte Variante auch eine längere Förderschnecke.

Bei einer Variante des Plastifizierzylinders gemäß Anspruch 10 wird erreicht, daß die Fuge zwischen Zylinderteil und Plastifizierteil in einen axialen Abschnitt des Plastifizierzylinders verlegt ist, der bei in hinterer Position befindlicher Förderschnecke hinter der Sperrebene der Rückstromsperre und somit in einem axialen Bereich niederen Druckes liegt, während der Abschnitt vor der Sperrebene, der beim Einspritzhub extrem hohen Drücken ausgesetzt ist, ausschließlich vom Düsenteil umschlossen ist.

Nachstehend wird die Erfindung anhand der Zeichnung an Ausführungsbeispielen erläutert.

Es zeigen:
- Fig. 1: Den teilweise vertikal geschnittenen Plastifizierzylinder in Seitenansicht,
- Fig. 2: den düsenseitigen Abschnitt des Plastifizierzylinders in perspektivischer Darstellung,
- Fig. 3: den Abschnitt des Plastifizierzylinders gemäß Fig.2 in einer Explosionszeichnung in kleinerem Maßstab,
- Fig. 4: einen Ausschnitt aus Fig. 1 in vergrößerter Darstellung,
- Fig. 5: den Plastifizierzylinder mit Schutzskelett, teilweise vertikal geschnitten in Frontansicht,
- Fig. 6: eine Variante des Plastifizierzylinders in einer Darstellung gemäß Fig. 4 und
- Fig. 7: einen Ausschnitt aus einer weiteren Variante des Plastifizierzylinders im vertikalen Schnitt.

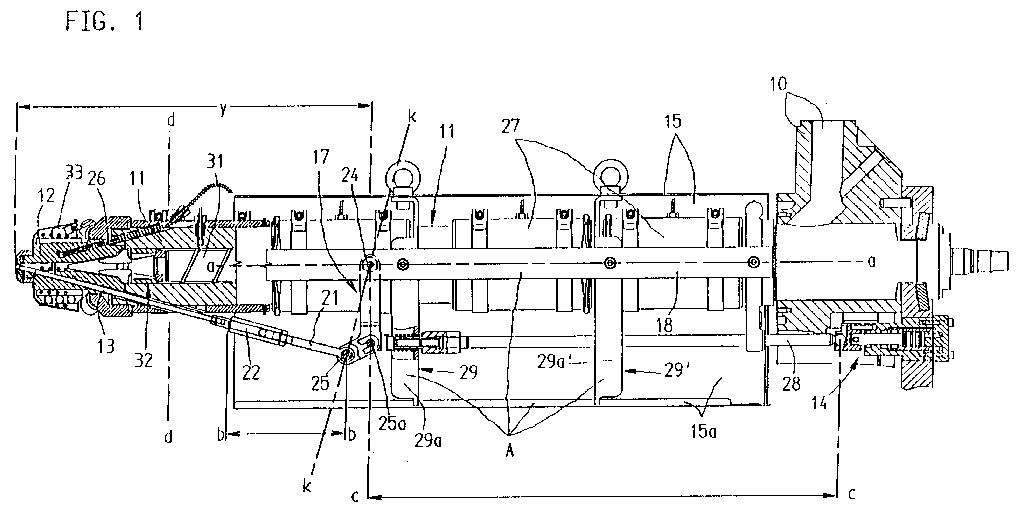

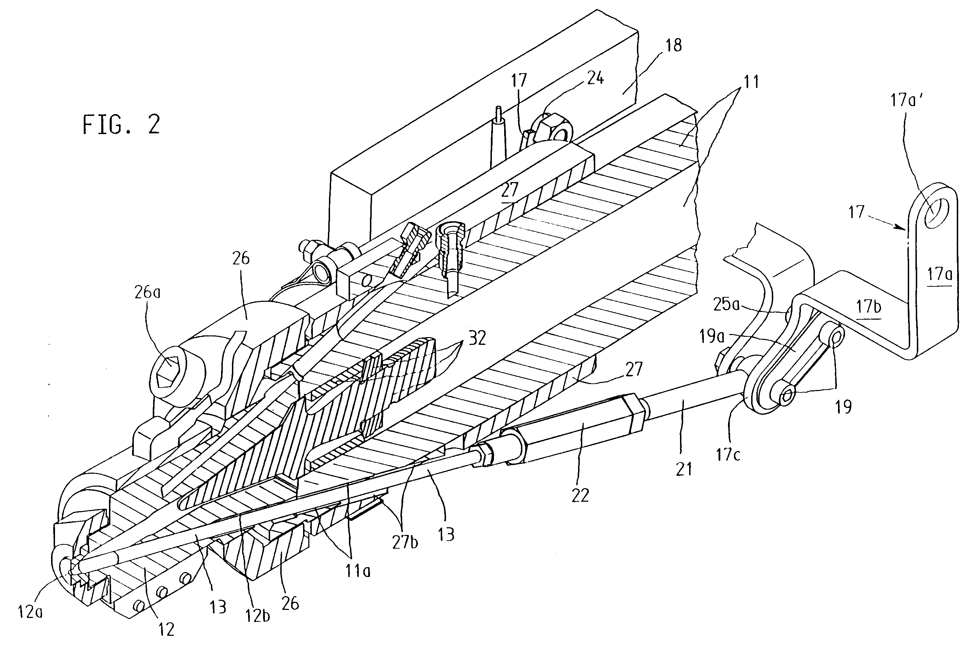

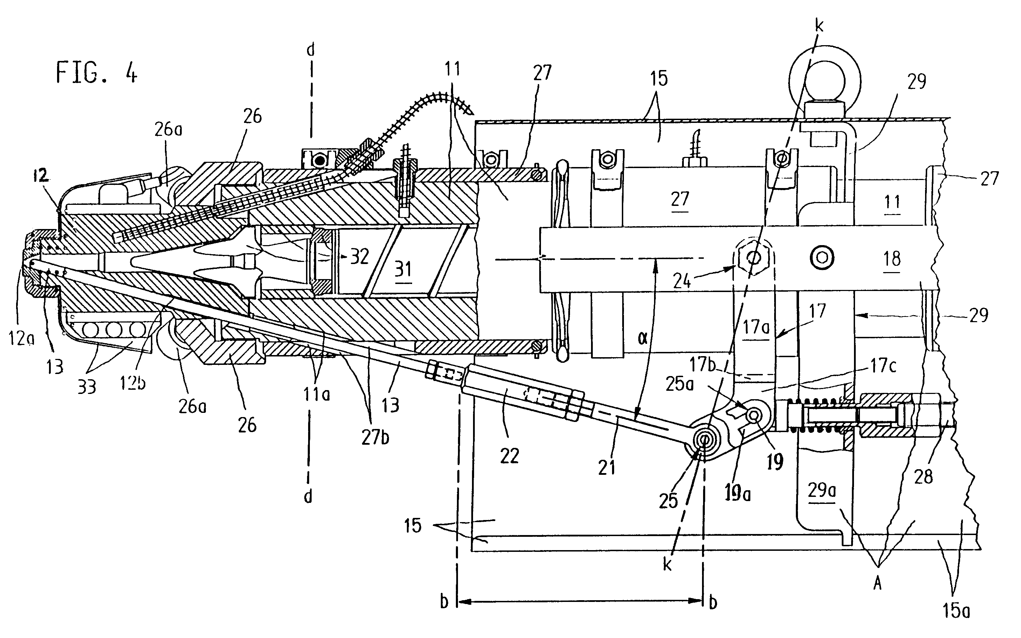

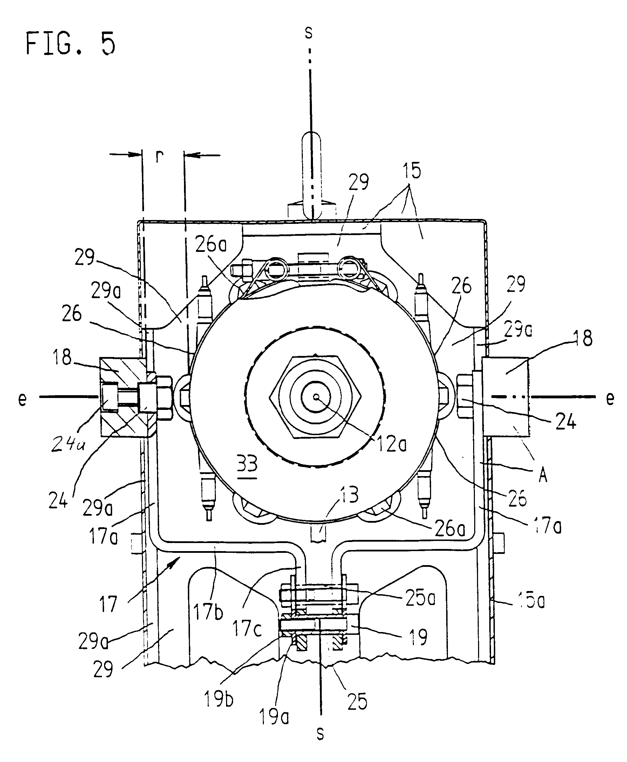

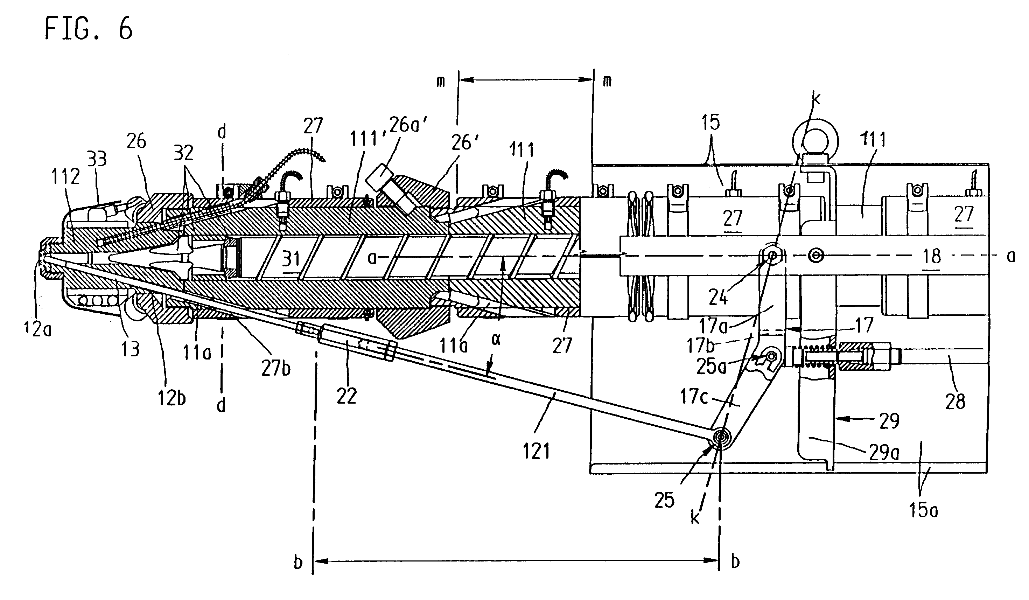

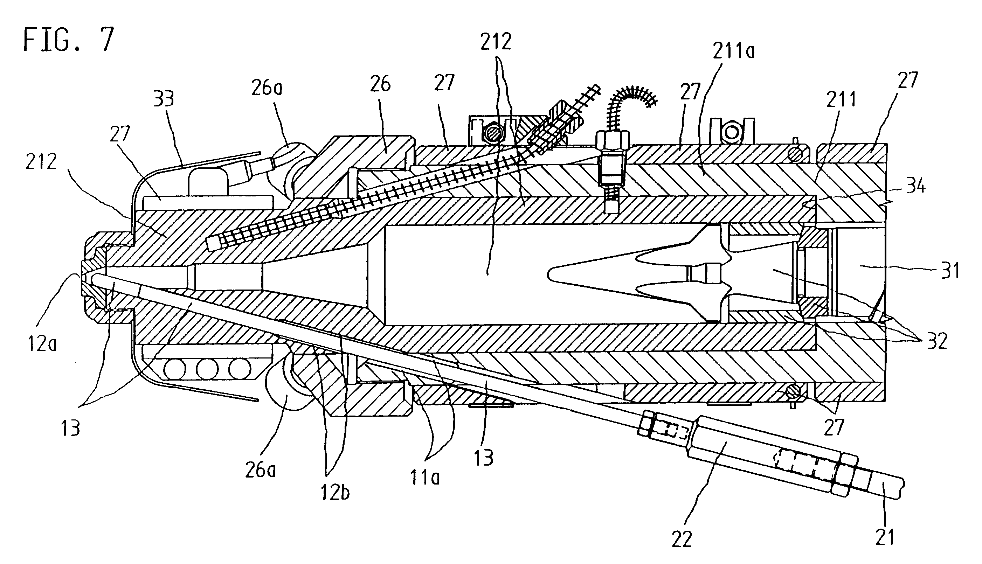

Dem Ausführungsbeispiel der Figuren 1 bis 5 und den Varianten gemäß den Figuren 6 und 7 ist folgendes gemeinsam: Der Plastifizierzylinder umfaßt ein Düsenteil 12;112;212 und wenigstens ein Zylinderteil 11;111;211. Das Düsenteil ist mittels eines radialsymmetrischen Schutzblechs 33 stirnseitig abgedeckt. Düsenteil und Zylinderteil sind mittels einer Spanneinrichtung 26,26a axial zusammengefügt. Die Spanneinrichtung besteht aus einem mit Innengewinde versehenen Spannring 26 und Gewindebolzen 26a. Das Innengewinde des Spannringes 26 steht mit dem Zylinderteil 11 bzw. 111 bzw. 211 im Eingriff. Der Spannring 26 übergreift das rückwärtige Ende des Düsenteils axial. In Gewindebohrungen des übergreifenden Abschnittes sind Gewindebolzen 26a angeordnet, welche im Ausführungsbeispiel einen Winkel zur Spritzachse a-a einschließen. Die Stirnkanten der Gewindebolzen 26a greifen an Druckflächen des Düsenteils 12 bzw. 112 bzw. 212 an. Es ist daher möglich, durch Drehen der Gewindebolzen das Düsenteil mit dem Zylinderteil axial zu verspannen. In dem für eine Kunststoff-Spritzgießmaschine bestimmten Plastifizierzylinder ist eine den Kunststoff bei Rotation plastifizierenden und durch einen Axialhub einspritzenden Förderschnecke 31 angeordnet. Beim axialen Hub verhindert eine Rückstromsperre 32 das Rückströmen des Kunststoffes. Der Plastifizierzylinder ist hinten von einem Trägerblock 10 lösbar aufgenommen. Er ist zudem mit einem Skelett versehen, das in einem axialen Bereich des Plastifizierzylinders zwischen der in vorderer Position befindlichen Rückstromsperre 32 und dem Trägerblock 10 angeordnet ist. Das Skelett umfaßt Skelettelemente 29,18,15,15a, die den Plastifizierzylinder und seine Heizelemente 27 gegen mechanische Einwirkungen von außen schützen sowie als Stütz- und Abstellorgane dienen. Der Plastifizierzylinder weist eine die Düsenmündung 12a öffnende bzw. schließende Düsennadel 13 auf. Diese verläuft im Neigungswinkel (Fig. 4,6) zur Spritzachse a-a. Die Düsennadel 13 ist in einer Bohrung des Düsenteils 12;112;212 geführt. Die Düsennadel 13 ist mittels eines Antriebszylinders 14 (Fig. 1) betätigbar, welche im Bereich des Trägerblockes 10 angeordnet ist. Eine kraftübertragende Brücke setzt die zur Spritzachse a-a parallelen Betätigungshübe des Antriebszylinders 14 mittels eines einarmigen Hebels 17 in die Axialbewegungen der Düsennadel 13 um. Der Schwenkhebel 17 ist in Schwenkbolzen 24 gelagert, die an Skelettelementen (Schienen 18) abgestützt sind. Am Schwenkhebel 17 sind ein im Neigungswinkel α geneigter Abschnitt b-b und ein zur Spritzachse a-a etwa parallel verlaufender Abschnitt c-c der Brücke mittels Achsbolzen 25,25a angelenkt. Der Abschnitt c-c ist im wesentlichen durch ein stabförmiges Element 28 gebildet. Die Schwenkbolzen 24 des innerhalb des Skelettes angeordneten Schwenkhebels 17 sind in radialem Abstand r (Fig. 5) zu den Heizelementen 27 des Plastifizierzylinders an Schienen 18 des Skeletts abgestützt und mittels Gewindebolzen 24a in den Schienen 18 gesichert. Die Schienen liegen in einer durch die Spritzachse a-a gehenden Ebene. Die Düsennadel 13 erstreckt sich bis in den axialen Bereich der in vorderer Position befindlichen Förderschnecke 31. Die Düsennadel 13 tritt im axialen Bereich der Rückstromsperre 32 konkret in deren Sperrebene d-d aus der mit einem rückwärtigen Abschnitt 12b,11a größerer lichter Weite versehenen Bohrung aus. In den zeichnerisch dargestellten Ausführungsbeispielen ist die Düsennadel 13 bei einem Neigungswinkel kleiner als 25° durch den Spannring 26 hindurchgeführt. Ein rückwärtiger Abschnitt 12b,11a größerer lichter Weite der von der Düsennadel 13 durchdrungenen Bohrung mündet annäherungsweise in der Sperrebene d-d der Rückstromsperre 32 im Zylinderteil 11;111;211a aus. Die Heizelemente 27 sind durch Gußschalen gebildet, die sich paarweise zu Heizmanschetten ergänzen, die als Widerstandsheizungen arbeiten. Die Düsennadel 13 durchdringt die vorderste Heizmanschette des benachbarten Zylindeteils 11,111,211a über Aussparungen 27b. Die beim Gießen der Gußschalen gebildeten Aussparungen 27b bilden einen an den Abschnitt 11a der Bohrung anschließende Durchtrittsöffnung in den Gußschalen.

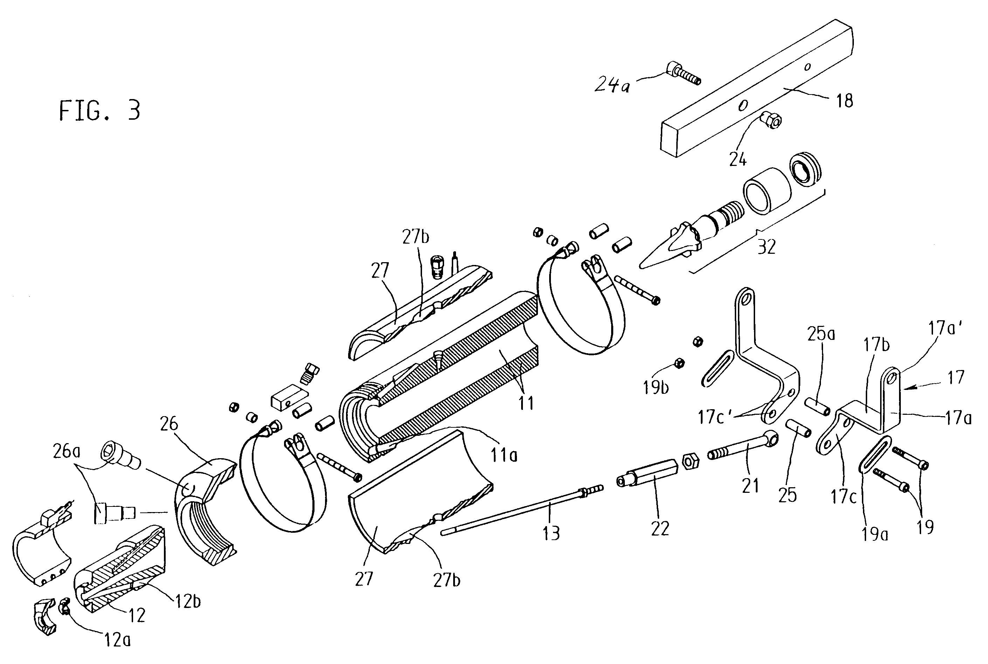

Die flachen, vertikalen Skelettelemente 29,29' sind mit Bördeln 29a,29a' versehen. An den Bördeln sind als weitere Skelettelemente Schienen 18 befestigt. Diese liegen in einer durch die Spritzachse a-a gehenden horizontalen Ebene e-e (Fig. 5). Die Schwenkbolzen 24 des Schwenkhebels 17 sind innen an diesen Schienen 18 abgestützt. Die Schwenkbolzen 24 und die Achsbolzen 25 liegen in einer annäherungsweise rechtwinklig zum Abschnitt b-b der kraftübertragenden Brücke verlaufenden Ebene k-k. Das Skelett umfaßt ferner einen die Schutzelemente 29,29' umgreifenden Schutzmantel. Dieser Schutzmantel besteht aus einer oberen Blechschale 15 und einer unteren Blechschale 15a, wobei beide Blechschalen mit ihren Längskanten an die benachbarten Oberflächen der Schienen 18 anschließen. Der Abschnitt b-b der kraftübertragenden Brücke ist durch eine Stange 21 bzw. 121 und eine Gewindemuffe 22 gebildet, welche die Stange 21 mit der Düsennadel 13 verbindet. Der Schwenkhebel 17 ist aus zwei verformten Blechzuschnitten gebildet. Diese Blechzuschnitte weisen obere vertikale Abschnitte 17a mit Lagerbohrungen 17a' sowie mittlere horizontale Abschnitte 17b und untere vertikale Abschnitte 17c mit Lagerbohrungen 17c' auf, wie insbesondere aus Fig. 3 erkennbar. Der zur Spritzachse a-a parallele Abschnitt c-c der kraftübertragenden Brücke ist mittels eines Achsbolzens 25a am oberen Ende der unteren, nach vorne geneigten Abschnitte 17c angelenkt. Der geneigte Abschnitt b-b der Brücke ist mittels des Achsbolzens 25 am unteren Ende der unteren Abschnitte 17c angelenkt. Die Achsbolzen 25,25a sind mittels Schraubenbolzen 19, Unterlegsringen 19a und Schraubenmuttern 19b an den unteren Abschnitten 17c des Bügels 17 befestigt, wobei die Schraubenbolzen 19 die als Hülsen ausgebildeten Achsbolzen 25,25a durchsetzen.

In der Variante gemäß Fig. 6 ist das Zylinderteil mittels einer Spanneinrichtung 26',26a' aus zwei Teilen, nämlich einem rückwärtigen Zylinderteil 111 und einem Verlängerungsteil 111' zusammengefügt. Die Spanneinrichtung 26',26a' verspannt die genannten Teile nach dem gleichen Spannprinzip wie die Spanneinrichtung 26,26a beim Ausführungsbeispiel der Fign. 1-5. Die Fuge zwischen Zylinderteil 111 und Verlängerungsteil 111' befindet sich in einem axialen Abstand m-m (Fig. 6) vom Schutzmantel, der dem Abstand der Fuge zwischen Düsenteil 12 und Zylinderteil 11 im Ausführungsbeispiel der Fign. 1-5 entspricht. Dabei ist der Abschnitt b-b der kraftübertragenden Brücke um die durch das Verlängerungsteil 111' verursachte Verlängerung des Plastifizierzylinders verlängert. Beim konkreten zeichnerischen Ausführungsbeispiel der Fign. 1-5 entspricht der Abstand y der Schwenkbolzen 24 von der Düsenmündung 12a etwa einem Drittel der Gesamtlänge des Plastifizierzylinders. Im Falle einer Zylinderverlängerung mittels Verlängerungsteil 111' (Fig. 6) ist dieser Abstand um die Länge des Verlängerungsteils 111' größer.

In der Variante gemäß Fig. 7 übergreift das Zylinderteil 211 mit einem vorderen Abschnitt 211a größerer lichter Weite das Düsenteil 212 axial. Das Düsenteil 212 erstreckt sich bis zu der in hinterer Position befindlichen Förderschnecke 31. Dadurch wird erreicht, daß sich die Fuge 34 zwischen Düsenteil 212 und Zylinderteil 211 bei jedweder axialer Position der Förderschnecke 31 außerhalb eines axialen Bereiches des Plastifizierzylinders befindet, der beim Einspritzen des Kunststoffes in die Gießform einem extrem hohen Druck unterworfen ist.

## Patentansprüche

1. Aus einem Düsenteil (12) und einem Zylinderteil (11) mittels einer Spanneinrichtung (26,26a) zusammengefügter Plastifizierzylinder für eine Kunststoff-Spritzgießmaschine, mit einer den Kunststoff bei Rotation plastifizierenden und durch einen axialen Hub einspritzenden Förderschnecke (31), bei welchem Hub eine Rückstromsperre (32) das Rückströmen des Kunststoffes verhindert,
welcher Plastifizierzylinder hinten von einem Trägerblock (10) aufgenommen und mit einem Skelett versehen ist, welches in einem axialen Bereich des Plastifizierzylinders zwischen der in vorderer Position befindlichen Rückstromsperre (32) und dem Trägerblock angeordnet ist und welches Skelettelemente (29,18,15) umfaßt, die den Plastifizierzylinder und seine Heizelemente (27) schützen sowie als Stütz- und Abstellorgane dienen,
und mit einer die Düsenmündung (12a) öffnenden bzw. schließenden Düsennadel (13), welche im Neigungswinkel (α in Fig. 4,6) zur Spritzachse (a-a) verläuft und in einer Bohrung des Düsenteils (12) geführt ist,
sowie mit einem im Bereich des Trägerblockes (10) angeordneten Antriebszylinder (14 in Fig.1) zum Verschieben der Düsennadel (13) und mit einer kraftübertragenden Brücke, welche die zur Spritzachse (a-a) parallelen Betätigungshübe des Antriebszylinders (14) mittels eines in Schwenkbolzen (24) gelagerten einarmigen Schwenkhebels (17) in die Axialbewegungen der Düsennadel (13) umsetzt, an welchem Schwenkhebel (17) ein im Neigungswinkel (α) geneigter Abschnitt (b-b) und ein zur Spritzachse (a-a) etwa parallel verlaufender Abschnitt (c-c) der Brücke mittels Achsbolzen (25,25a) angelenkt sind,
dadurch gekennzeichnet, daß die Schwenkbolzen (24) des innerhalb des Skelettes angeordneten Schwenkhebels (17) in radialem Abstand (r in Fig. 5) zu den Heizelementen (27) des Plastifizierzylinders an Skelettelementen (Schienen 18) abgestützt sind, wobei die Düsennadel (13) sich bis in den axialen Bereich der in vorderer Position befindlichen Förderschnecke (31) erstreckt und im axialen Bereich der Rückstromsperre (32) aus der mit einem rückwärtigen Abschnitt (12b,11a) größerer lichter Weite versehenen Bohrung austritt.

2. Plastifizierzylinder nach Anspruch 1, dadurch gekennzeichnet, daß die Düsennadel (13) bei einem Neigungswinkel (α) kleiner als 25° durch einen an der Fuge zwischen Düsenteil (12) und Zylinderteil (11) angeordneten Spannring (26) der Spanneinrichtung (26,26a) hindurchgeführt ist, wobei der Abschnitt (12b,11a) größerer lichter Weite der Bohrung annäherungsweise in der Sperrebene (d-d) der Rückstromsperre (32) im Zylinderteil (11) ausmündet.

3. Plastifizierzylinder nach Anspruch 1 oder 2, dadurch gekennzeichnet, daß die Düsennadel (13) als Gußschalen ausgebildete Heizelemente (27) über Aussparungen (27b) durchdringt, welche Aussparungen (27b) einen an den Abschnitt (11a) der Bohrung anschließende Durchtrittsöffnung in den Gußschalen bildet.

4. Plastifizierzylinder nach einem der Ansprüche 1 bis 3, dadurch gekennzeichnet, daß das Skelett flache, das Zylinderteil (11) in kreisförmigen Durchbrüchen aufnehmende vertikale Skelettelemente (29,29') sowie an deren Bördel (29a,29a') befestigte Schienen (18) umfaßt, welche in einer durch die Spritzachse (a-a) gehenden horizontalen Ebene (e-e in Fig. 5) liegen, wobei die Schwenkbolzen (24) des Schwenkhebels (17) innen an diesen Schienen (18) abgestützt sind und mit dem vorderen Achsbolzen (25) in einer annäherungsweise rechtwinklig zum Abschnitt (b-b) der Brücke verlaufenden Ebene (k-k) liegen.

5. Plastifizierzylinder nach einem der vorhergehenden Ansprüche, dadurch gekennzeichnet, daß das Skelett einen die Skelettelemente (29,29') umgreifenden Schutzmantel umfaßt, welcher an den Skelettelementen (29,29') befestigt ist und den aus zwei verformten Blechzuschnitten gebildeten zweiteiligen Schwenkhebel (17) sowie den Abschnitt (b-b) der Brücke umschließt (Fig. 1-5; 7).

6. Plastifizierzylinder nach einem der vorhergehenden Ansprüche, dadurch gekennzeichnet, daß der Abschnitt (b-b) der Brücke durch eine Stange (21) und eine Gewindemuffe (22) gebildet ist, welche die Stange (21) mit der Düsennadel (13) verbindet.

7. Plastifizierzylinder nach einem der Ansprüche 5 oder 6, dadurch gekennzeichnet, daß die beiden verformten Blechzuschnitte des Schwenkhebels (17) obere vertikale Abschnitte (17a) mit Lagerbohrungen (17a') sowie mittlere horizontale Abschnitte (17b) und untere vertikale Abschnitte (17c) mit Lagerbohrungen (17c') aufweisen, wobei der zur Spritzachse (a-a) parallele Abschnitt (c-c) der kraftübertragenden Brücke mittels eines Achsbolzens (25a) am oberen Ende der unteren, nach vorne geneigten Abschnitte (17c) und der geneigte Abschnitt (b-b) mittels des Achsbolzens (25) am unteren Ende der unteren Abschnitte (17c) angelenkt sind.

8. Plastifizierzylinder nach einem der Ansprüche 4 bis 7, dadurch gekennzeichnet, daß das Zylinderteil mittels einer Gewindemuffe (26) aus zwei Teilen (Zylinderteil 111, Verlängerungsteil 111') zusammengefügt ist, wobei sich die Fuge zwischen den genannten Teilen (111,111') in einem axialen Abstand (m-m in Fig. 6) vom Schutzmantel (15,15a) befindet, der dem Abstand der Fuge zwischen Düsenteil (12) und Zylinderteil (11) ohne Verlängerungsteil (111') entspricht (s. Fig. 1), wobei der Abschnitt (b-b) der Brücke um die durch das Verlängerungsteil (111') verursachte Verlängerung des Plastifizierzylinders verlängert ist (Fig. 6).

9. Plastifizierzylinder nach einem der vorhergehenden Ansprüche, dadurch gekennzeichnet, daß der Abstand (y) der Schwenkbolzen (24) von der Düsenmündung (12a) etwa einem Drittel der Gesamtlänge des Plastifizierzylinders entspricht (Fig. 1-5) und im Falle einer Zylinderverlängerung mittels Verlängerungsteil (111' in Fig. 6) dieser Abstand um die Länge des Verlängerungsteils (111') größer ist.

10. Plastifizierzylinder nach einem der Ansprüche 1 bis 7, dadurch gekennzeichnet, daß das Zylinderteil (211) mit einem vorderen Abschnitt (211a) größerer lichter Weite das Düsenteil (212) axial übergreift, welches sich bis zu der in hinterer Position befindlichen Förderschnecke (34) erstreckt (Ausführungsbeispiel der Fig. 7).

## Claims

1. Plasticising cylinder for a plastics injection moulding machine composed by means of a clamping device (26, 26a) from a nozzle portion (12) and a cylinder section (11), having a feed screw (31) which plasticises the plastic during rotation and injects it by means of an axial stroke, during which stroke a back flow valve (32) prevents return flow of the plastic, said plasticising cylinder being accommodated at the rear by a carrier block (10), provided with a skeleton which is disposed in an axial area of the plasticising cylinder between the back flow valve (32) located in the forward position and the carrier block, said skeleton including skeleton members (29, 18, 15) protecting the plasticising cylinder and its heating elements (27) as well as serving as support and shut-off units, and with a nozzle needle (13) opening or closing the nozzle orifice (12a), said nozzle needle (13) extending at an angle of inclination (alpha in Figures 4, 6) to the injection axis (a - a) and being guided in a bore of the nozzle portion (12), and with a drive cylinder (14 in Figure 1) disposed in the region of the carrier block (10) for displacing the nozzle needle (13) and with a force-transmitting linkage, which converts the actuating strokes of the drive cylinder (14) parallel to the injection axis (a - a) by means of a single-armed pivot lever (17) mounted in pivot pins (24), into the axial movements of the nozzle needle (13), there being pivotally connected to said pivot lever (17) a portion (b - b) inclined at an angle of inclination (alpha) and a portion (c - c) extending approximately parallel to the injection axis (a - a), of the linkage, by means of pivot means (25, 25a), characterised in that the pivot means (24) of the pivot lever (17) disposed within the skeleton are supported at a radial spacing (r in Figure 5) to the heating element (27) of the plasticising cylinder on skeleton members (track rods 18), the nozzle needle (13) extending into the axial region of the feed screw (31) located in the forward position, and in the axial region on the back flow valve (32) emerges out of the bore provided with a rearward portion (12b, 11a) with greater clearance.

2. Plasticising cylinder according to Claim 1, characterised in that the nozzle needle (13) is passed through a clamping ring (26) of the clamping device (26, 26a) disposed at the parting line between nozzle portion (12) and cylinder section (11) at an angle of inclination (alpha) of less than 25°, the portion (12b, 11a) of the bore with the greater clearance opening approximately in the blocking plane (d - d) of the back flow valve (32) in the cylinder section (11).

3. Plasticising cylinder according to Claim 1 or 2, characterised in that the nozzle needle (13) penetrates through heating elements (27) in the form of cast shell sections, through apertures (27b), said apertures (27b) forming a communicating opening into the cast shell sections communicating with the portion (11a) of the bore.

4. Plasticising cylinder according to one of Claims 1 - 3, characterised in that the skeleton includes flat vertical skeleton members (29, 29') accommodating the cylinder section (11) in circular apertures, and track rods (18) secured to their flanges (29a, 29a') which lie in a horizontal plane (e - e in Figure 5) passing through the injection axis (a - a), the pivot pins (24) of the pivot lever (17) being internally supported on these track rods (18) and lying in a plane (k - k) approximately at right angles to the portion (b - b) of the linkage.

5. Plasticising cylinder according to one of the preceding Claims, characterised in that the skeleton includes a protective shell surrounding the skeleton members (29, 29'), which is secured to the skeleton members (29, 29') and surrounds the two-part pivot lever (17) formed from two deformed sheet metal blanks, and the portion (b - b) of the linkage (Figures 1 - 5; 7).

6. Plasticising cylinder according to one of the preceding Claims, characterised in that the portion (b - b) of the linkage is formed by a rod (21) and a tapped sleeve (22), which connects the rod (21) to the nozzle needle (13).

7. Plasticising cylinder according to one of Claims 5 or 6, characterised in that the two deformed sheet metal blanks of the pivot lever (17) have upper vertical portions (17a) with bearing bores (17a') and central horizontal portions (17b) and lower vertical portions (17c) with bearing bores (17c'), the portion (c - c) of the force-transmitting linkage parallel to the injection axis (a - a) being pivotally connected by means of pivot means (25a) to the upper end of the lower, forwardly-inclined portions (17c), and the inclined portion (b - b) being pivotally connected by means of the pivot pin (25) to the lower end of the lower portions (17c).

8. Plasticising cylinder according to one of Claims 4 - 7, characterised in that the cylinder portion is assembled by means of a tapped sleeve (26) from two parts (cylinder section 111, extension part 111'), the parting line between the named parts (111, 111') being at an axial spacing (m - m in Figure 6) from the protective shell (15, 15a), which corresponds to the spacing of the parting line between nozzle portion (12 ) and cylinder section (11) without extension part (111') (see Figure 1), the portion (b - b) of the linkage being extended by the extension of the plasticising cylinder caused by the extension part (111') (Figure 6).

9. Plasticising cylinder according to one of the preceding Claims, characterised in that the spacing (y) of the pivot means (24) from the nozzle orifice (12a) corresponds approximately to one-third of the overall length of the plasticising cylinder (Figures 1 - 5) and, in the case of a cylinder extension, by means of extension part (111' in Figure 6), this distance is greater by the length of the extension part (111').

10. Plasticing cylinder according to one of Claims 1 - 7, characterised in that the cylinder section (211) extends with a front portion (211a) with a greater clearance axially over the nozzle portion (212), which extends as far as the feed screw (34) located in the rearward position (embodiment of Figure 7).

## Revendications

1. Cylindre de plastification pour une machine à mouler par injection les matières plastiques, composé d'une partie buse (12) et d'une partie cylindrique (11) assemblées au moyen d'un dispositif de serrage (26, 26a), contenant une vis transporteuse (31) qui plastifie la matière plastique en tournant et l'injecte par une course axiale, au cours de laquelle un clapet antiretour (31) empêche le reflux de la matière plastique,
cylindre de plastification qui est reçu par sa partie arrière dans un bloc porteur (10) et est pourvu d'un squelette agencé dans une zone axiale du cylindre de plastification entre le clapet antiretour (32) à sa position avant et le bloc porteur et qui comprend des éléments de squelette (29, 18, 15) protégeant le cylindre de plastification et ses éléments chauffants (27) et servant d'organes de support et de pose,
et comprenant une aiguille ou pointeau de buse (13), servant à ouvrir ou à fermer l'orifice (12a) de la buse, s'étendant suivant un angle d'inclinaison (α sur les figures 4, 6) par rapport à l'axe d'injection (a-a) et guidé dans un alésage de la partie buse (12), de même qu'un vérin de commande (14 sur la figure 1) installé dans la zone du bloc porteur (10) et servant à déplacer l'aiguille (13) de la buse, ainsi qu'un pont transmetteur d'efforts qui transforme les courses d'actionnement, parallèles à l'axe d'injection (a-a), du vérin de commande (14) au moyen d'un levier pivotant (17) à un bras, levier qui est monté sur des pivots (24), en mouvements axiaux de l'aiguille (13) de la buse, levier pivotant (17) sur lequel sont articulées, au moyen d'axes d'articulation (25, 25a), une partie de pont (b-b) inclinée suivant l'axe d'inclinaison (α) et une partie de pont (c-c) s'étendant à peu près parallèlement à l'axe d'injection (a-a), caractérisé en ce que les pivots (24) du levier pivotant (17), disposé à l'intérieur du squelette, sont supportés à distance radiale (r sur la figure 5) par rapport aux éléments chauffants (27) du cylindre de plastification sur des éléments de squelette (rails 18), l'aiguille (13) de la buse s'étendant jusque dans la zone axiale de la vis (31) à sa position avant et émergeant de son alésage récepteur, pourvu d'une partie arrière (12b, 11a) de plus grande largeur intérieure, dans la zone axiale du clapet antiretour (32).

2. Cylindre de plastification selon la revendication 1, caractérisé en ce que l'aiguille (13) de la buse traverse, sous un angle d'inclinaison (α) inférieur à 25°, une bague de serrage (26) faisant partie du dispositif de serrage (26, 26a) et disposée au joint entre la partie buse (12) et la partie cylindrique (11), la partie (12b, 11a) de plus grande largeur intérieure de l'alésage recevant l'aiguille débouchant approximativement dans le plan d'arrêt (d-d) du clapet antiretour (32) de la partie cylindrique (11).

3. Cylindre de plastification selon la revendication 1 ou 2, caractérisé en ce que l'aiguille (13) de la buse traverse, par des évidements (27b), des éléments chauffants (27) réalisés sous la forme de coquilles en fonte, évidements (27b) qui forment dans ces coquilles une ouverture de passage se raccordant à la partie (11a) de l'alésage recevant l'aiguille.

4. Cylindre de plastification selon une des revendications 1 à 3, caractérisé en ce que le squelette comprend des éléments de squelette verticaux (29, 29') de forme plate, qui reçoivent la partie cylindrique (11) dans des ouvertures circulaires, ainsi que des rails (18) fixés à des rebords (29a, 29a') de ces éléments, rails qui sont situés dans un plan horizontal (e-e sur la figure 5) contenant l'axe d'injection (a-a), les pivots (24) du levier pivotant (17) étant supportés à l'intérieur de ces rails (18) et situés, ensemble avec l'axe d'articulation (25) placé à l'avant du levier, dans un plan (k-k) à peu près perpendiculaire à la partie (b-b) du pont.

5. Cylindre de plastification selon une des revendications précédentes, caractérisé en ce que le squelette comprend une enveloppe protectrice entourant les éléments de squelette (29, 29'), enveloppe qui est fixée à ces éléments de squelette (29, 29') et entoure le levier pivotant (17) en deux parties, formé de deux découpes en tôle déformées, ainsi que la partie (b-b) du pont (figures 1 - 5; 7).

6. Cylindre de plastification selon une des revendications précédentes, caractérisé en ce que la partie (b-b) du pont est formée par une tige (21) et un manchon fileté (22) qui relie la tige (21) à l'aiguille (13) de la buse.

7. Cylindre de plastification selon la revendication 5 ou 6, caractérisé en ce que les deux découpes en tôle déformées du levier pivotant (17) comprennent des branches verticales supérieures (17a) pourvues de trous (17a') pour le montage pivotant, des branches horizontales médianes (17b) et des branches verticales inférieures (17c) pourvues de trous (17c') pour le montage articulé, la partie (c-c) du pont transmetteur d'efforts, partie qui est parallèle à l'axe d'injection (a-a), étant articulée au moyen d'un axe (25a) sur l'extrémité supérieure des branches inférieures (17c), lesquelles sont orientées obliquement vers l'avant, et la partie inclinée (b-b) du pont étant articulée au moyen d'un axe (25) sur l'extrémité inférieure des branches inférieures (17c).

8. Cylindre de plastification selon une des revendications 4 à 7, caractérisé en ce que la partie cylindrique est composée de deux portions (portion cylindrique 111, rallonge 111') assemblées au moyen d'un manchon fileté (26), le joint entre lesdites portions (111, 111') étant situé à une distance axiale (m-m sur la figure 6) de l'enveloppe protectrice (15, 15a) qui correspond à l'espacement du joint entre la partie buse (12) et la partie cylindrique (11) sans rallonge (111') (voir figure 1), la partie de pont inclinée (b-b) étant augmentée en longueur d'une quantité correspondant à l'allongement du cylindre de plastification par la rallonge (111') (figure 6).

9. Cylindre de plastification selon une des revendications précédentes, caractérisé en ce que la distance (y) séparant les pivots (24) de l'orifice (12a) de la buse correspond à peu près à un tiers de la longueur totale du cylindre de plastification (figures 1 - 5), cette distance étant augmentée de la longueur de la rallonge (111') au cas ou le cylindre est allongé par celle-ci (figure 6).

10. Cylindre de plastification selon une des revendications 1 à 7, caractérisé en ce que la partie cylindrique (211) recouvre la partie buse (212) axialement par un tronçon avant (211a) de plus grand diamètre intérieur, qui s'étend jusqu'à la vis transporteuse (31) occupant sa position arrière (exemple de réalisation selon la figure 7).
